# DEMANDE DE BREVET EUROPEEN

(11) **EP 1 367 285 A1**
(43) Date de publication de la demande: **03.12.2003**
(21) Numéro de dépôt: 03352011.5
(22) Date de dépôt: 28.05.2003
(51) Int. Cl.: F16D 69/04, F16D 65/095, F16D 55/32, F03D 7/00

(54) **Frein à disque, notamment our usage industriel**

(30) Priorité: 30.05.2002 FR 0206637
(71) Demandeur: Sime-Stromag SA, 18150 La Guerche-sur-l'Aubois (FR)
(72) Inventeur: Chamignon, Matthieu, 18000 Bourges (FR); Eon, Christian, 58660 Coulanges les Nevers (FR)
(74) Mandataire: Santarelli

(57) **Abrégé**

Frein à disque pour usage industriel comportant au moins deux patins portés par un étrier adapté à chevaucher le disque et destinés à coopérer chacun avec une face latérale du disque sous l'action de moyens de manoeuvre (16-17) et avec une butée transversale lors d'un freinage ménagée sur une plaquette (21) montée sur ledit étrier de manière amovible transversalement ; la plaquette (21) présente un logement dans lequel le patin (23) est monté coulissant parallèlement à l'axe du disque, la plaquette et le patin constituant un sous-ensemble pré-ajusté ; l'étrier porte des moyens de positionnement (19) de la plaquette (21), qui comprennent au moins un pion s'étendant axialement.

La plaquette (21) comporte au moins un trou taraudé (24) dans lequel est amenée à être vissée une vis (25) s'étendant axialement dans un passage (18) de l'étrier, la tête de la vis (25) prenant appui sur l'étrier.

## Description

La présente invention concerne d'une manière générale les freins à disque, notamment pour usage industriel.

De tels freins comportent généralement au moins deux patins portés par un étrier adapté à chevaucher le disque et destinés à coopérer chacun avec une face latérale du disque sous l'action de moyens de manoeuvre. Lors d'un freinage, les patins, qui ont tendance à être entraînés circonférentiellement par le disque, coopèrent avec une butée dite transversale qui reçoit le couple de freinage, lequel est transmis à un support fixe par l'étrier.

Les applications de tels freins sont multiples : engins de manutention, freinage en azimut pour le contrôle du mouvement de giration des nacelles d'éoliennes, ou autres. Alors que généralement un frein est destiné à la dissipation d'énergie, la présente invention est plus particulièrement destinée à des freins de giration pour lesquels il n'y a pas, ou très peu, de dissipation d'énergie. Ces freins servent notamment à assurer le maintien dans une position donnée d'un dispositif ou à aider à la réalisation de son positionnement.

Comme on le sait, même pour des freins de giration servant au maintien et au positionnement, les patins sont soumis à usure et doivent être remplacés une fois usés.

Le document DE-18 87 149 U décrit un frein à disque dans lequel le changement d'un patin est facilité. Le frein à disque révélé dans ce document comporte un étrier fixe. Dans chaque branche de cet étrier se trouve un cylindre de manoeuvre ainsi que des butées pour le patin correspondant. Les butées sont chacune fixée par deux vis sur une branche de l'étrier, les vis traversant la branche correspondante. Ces vis peuvent être desserrées de l'extérieur.

La présente invention a pour but de proposer un frein à disque dans lequel le changement des patins est aisé et rapide à réaliser. En effet, lorsqu'il s'agit d'un frein d'éolienne, celui-ci est souvent disposé en haut de l'éolienne, à quelques dizaines de mètres du sol. Il est alors important que le changement puisse être facilement réalisable.

La présente invention propose ainsi un frein à disque pour usage industriel comportant au moins deux patins portés par un étrier adapté à chevaucher le disque et destinés à coopérer chacun avec une face latérale du disque sous l'action de moyens de manoeuvre, et avec une butée transversale lors d'un freinage.

Selon l'invention, la butée transversale est ménagée sur une plaquette montée sur ledit étrier de manière amovible transversalement.

Avantageusement, la plaquette présente un logement dans lequel le patin est monté coulissant parallèlement à l'axe du disque, la plaquette et le patin constituant un sous-ensemble pré-ajusté.

De préférence, l'étrier porte des moyens de positionnement de la plaquette ; les moyens de positionnement comprennent au moins un pion s'étendant axialement ; la plaquette porte latéralement une échancrure destinée à coopérer avec le pion, la forme de l'échancrure et celle du pion étant complémentaires ; la forme de l'échancrure et celle du pion sont du genre tronconique, la grande base du tronc de cône étant située vers l'extérieur, c'est-à-dire vers le disque.

Avantageusement, la plaquette comporte au moins un trou taraudé dans lequel est amenée à être vissée une vis s'étendant axialement dans un passage de l'étrier, la tête de la vis prenant appui sur l'étrier ; le passage dans l'étrier est de forme oblongue, sa grande dimension s'étendant transversalement.

De préférence, deux patins sont prévus de chaque côté du disque.

Avantageusement, ledit au moins un pion est disposé centralement et coopère avec lesdits deux patins.

De préférence, deux pions sont prévus disposés radialement.

Selon une forme de réalisation, l'étrier est fixe en étant assujetti à un flasque fixe.

Avantageusement, l'étrier est en deux pièces, solidarisées par vis ; les vis qui solidarisent les deux pièces de l'étrier assujettissent celui-ci au flasque fixe. On peut également prévoir un pion de cisaillement entre les deux pièces de l'étrier.

De préférence, les moyens de manoeuvre comprennent des pistons montés coulissant dans des alésages cylindriques ; il y a autant de pistons, et donc d'alésages cylindriques, que de patins.

Avantageusement, chaque plaquette munie de son patin est adaptée à ne transmettre que l'effort de retenue dû à l'action du piston qui lui est associé.

Les alésages cylindriques définissent avec les pistons des chambres destinées à recevoir un fluide mis en pression pour le freinage du disque, par exemple un fluide hydraulique.

Dans le cas d'un frein à disque actionné par des pistons montés coulissant dans un cylindre et dans le cas où un patin est monté dans un logement d'une plaquette, alors le jeu entre un patin et son logement est de préférence inférieur au jeu entre le piston et son cylindre correspondant.

Avantageusement, l'étrier comprend des zones d'appui sur le flasque fixe non seulement au droit de sa zone d'assujettissement mais également au droit des moyens de manoeuvre.

Lorsque l'étrier est en deux pièces, l'une des pièces de l'étrier est munie de moyens permettant son pré-assemblage sur le flasque fixe.

Selon une application préférée, le frein à disque ci-dessus est destiné au contrôle de giration d'un dispositif tel par exemple une nacelle d'éolienne.

Les caractéristiques et avantages de l'invention ressortiront d'ailleurs de la description qui va suivre, à titre d'exemple, en référence aux dessins annexés dans lesquels :
- la figure 1 est une vue schématique en perspective d'un frein à disque selon l'invention,
- la figure 2 est une vue partielle en coupe axiale du frein de la figure 1,
- la figure 3 est une autre vue partielle en coupe axiale du frein de la figure 1 montrant la fixation du frein sur un support fixe,
- la figure 4 est une vue partielle en perspective de l'une des pièces de l'étrier en deux pièces des figures 1 à 3,
- la figure 5 est une vue à plus grande échelle de la bulle V de la figure 2,
- la figure 6 est une vue en perspective de la plaquette sans son patin,
- la figure 7 est une vue en perspective de la plaquette de la figure 6 équipée de son patin,
- la figure 8 représente un jeu de plaquettes comportant des patins orientés, et
- les figures 9 et 10 montrent l'application d'un jeu de plaquettes de la figure 8.

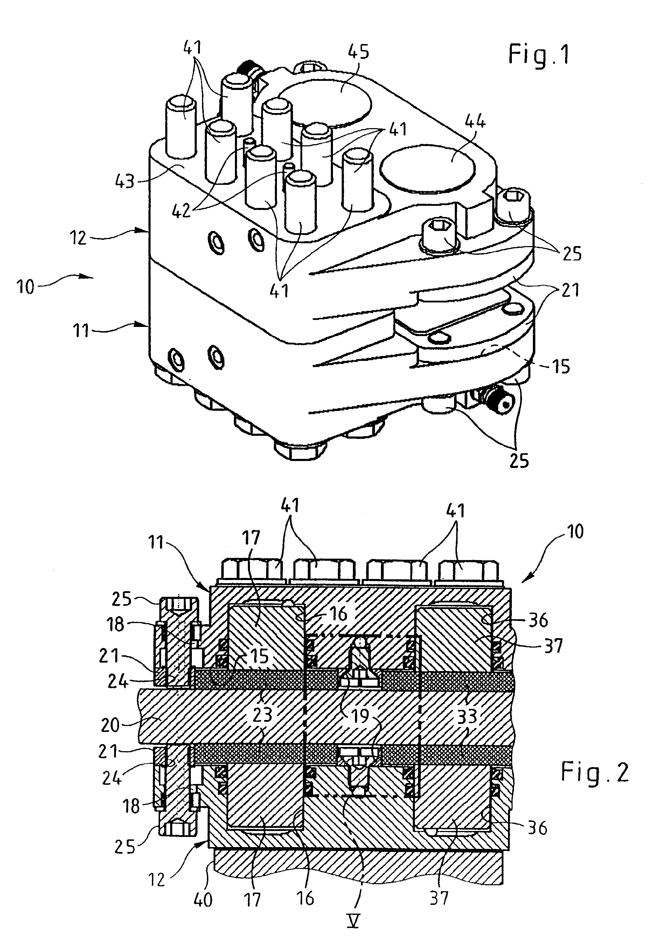

En se reportant aux figures 1 à 4, on voit un frein à disque comportant au moins deux patins portés par un étrier 10 adapté à chevaucher un disque 20 et destinés à coopérer chacun avec une face latérale du disque sous l'action de moyens de manoeuvre et avec une butée transversale lors d'un freinage.

Ici, l'étrier 10 est du type fixe, solidaire d'un support 40 de la manière décrite ci-après. Comme suggéré sur la figure 1, le frein à disque selon l'invention décrit ici est plus particulièrement destiné à un disque 20 d'axe vertical. Il s'agit par exemple d'un frein de nacelle d'une éolienne. Ce frein permet de maintenir l'orientation donnée à l'hélice de l'éolienne et est aussi utilisé lors du positionnement de l'hélice pour l'arrêter dans la position choisie.

Dans l'exemple représenté, deux paires de patins sont prévues, une première paire de patins 23 et une seconde paire de patins 33.

Chaque patin 23 est monté, coulissant parallèlement à l'axe du disque 20, dans un logement 22 que présente une plaquette 21 montée de manière amovible transversalement, c'est-à-dire perpendiculairement à l'axe du disque 20, sur l'étrier 10.

L'étrier 10 étant fixe, chaque patin 23 est associé à des moyens de manoeuvre, ici du type hydraulique et comportant un piston 17 monté classiquement dans un alésage cylindrique ou cylindre 16.

Dans l'exemple représenté, l'étrier 10 est en deux pièces et comprend un premier étrier 11, ou étrier inférieur, et un second étrier 12, ou étrier supérieur. Lorsque les étriers inférieur 11 et supérieur 12 sont assemblés, ils définissent un passage 13 par lequel l'étrier 10 est adapté à chevaucher le disque 20.

L'étrier inférieur 11 comprend deux faces 14, 15 parallèles, perpendiculaires à l'axe du disque 20 et décalées axialement : une face 14 d'assemblage sur laquelle il reçoit l'étrier supérieur 12, et une face 15 de réception sur laquelle il reçoit deux plaquettes 21 et 31 munies chacune d'un patin, un patin 23 et un patin 33 respectivement. C'est dans la face 15 de réception que débouchent les cylindres borgnes 16 et 36 dans lesquels coulissent les pistons 17 et 37 associés, lesquels sont au droit des patins 23 et 33 lorsque les plaquettes 21 sont montées sur l'étrier inférieur 11.

A cet effet, l'étrier inférieur 11 porte des moyens de positionnement pour les plaquettes 21. Ces moyens de positionnement comprennent au moins un pion 19 s'étendant axialement, émergeant de la face de réception 15. Dans la forme de réalisation représentée au dessin, deux pions 19 sont disposés radialement l'un par rapport à l'autre.

Les deux pions 19 sont disposés centralement entre les deux plaquettes 21 portant le patin 23 et le patin 33. Avantageusement, chaque plaquette 21 porte latéralement une échancrure 26 adaptée à coopérer avec le (ou les) pion(s) 19. On a donc ici deux échancrures 26, dont la forme est complémentaire de la partie du pion 19 avec laquelle elles coopèrent. Avantageusement, ces formes sont du genre tronconique, la grande base du tronc de cône étant située vers l'extérieur, c'est-à-dire vers le disque 20.

La plaquette 21 est adaptée à être fixée sur l'étrier 11. Pour ce faire, la plaquette 21 comporte au moins un trou taraudé 24 (ici deux trous taraudés 24) dans lequel est amenée à être vissée une vis 25 s'étendant axialement dans un passage 18 de l'étrier 11, la tête de la vis 25 prenant appui sur l'étrier 11. Le passage 18 est de forme oblongue, sa grande dimension s'étendant transversalement, en direction des pions 19. Ces derniers étant disposés radialement l'un par rapport à l'autre, la forme oblongue est alors dirigée sensiblement tangentiellement dans le cas de figure représenté au dessin. Grâce à cette disposition, on est sûr, avant serrage des vis 25, d'appliquer transversalement les échancrures 26 contre les colonnettes 19.

Bien entendu, le montage avec jeu pourrait être obtenu autrement que par des passages de forme oblongue. Ainsi par exemple, des passages cylindriques dont le diamètre serait légèrement supérieur à celui du corps de la vis 25 pourrait convenir.

Cette disposition s'applique tant aux plaquettes 21 placées de part et d'autre du disque et portant les patins 23 qu'à celles placées également de part et d'autre du disque et qui portent les patins 33, ces dernières étant fixées par des vis 35.

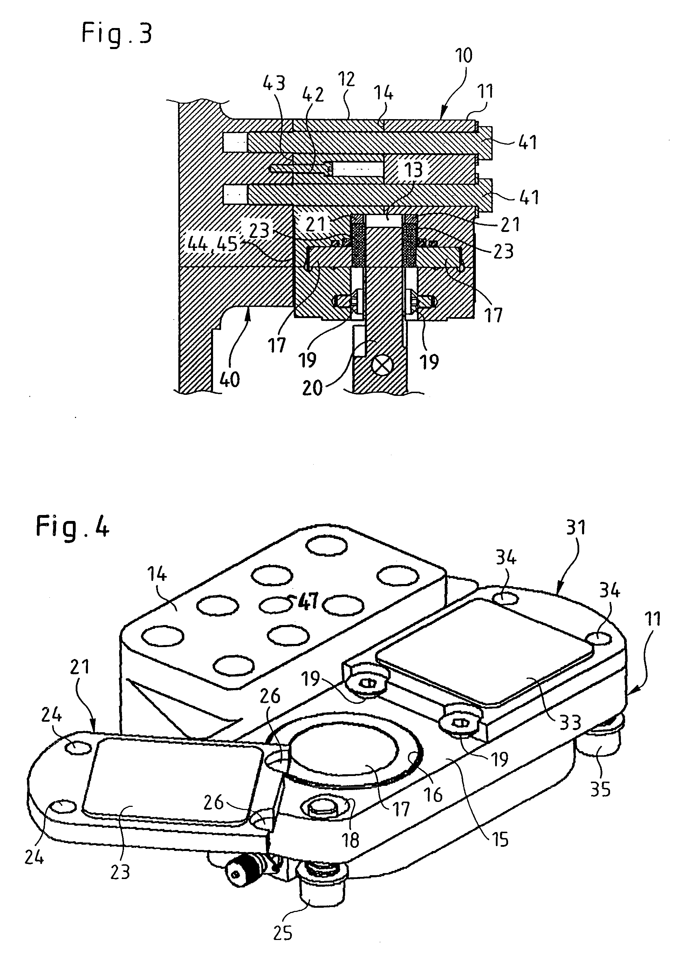

L'étrier 10 est fixé au support 40 par des vis 41. Comme visible sur la figure 3, ces vis 41 traversent les deux étriers 11, 12 au droit de la face d'assemblage 14 de l'étrier inférieur 11 et sont vissées dans des trous taraudés du support 40 sur une surface de montage 43. Pour faciliter cette opération d'assemblage, l'étrier supérieur 12 est d'abord provisoirement fixé sur le support 40 par des vis de pré-assemblage 42, puis l'étrier supérieur 12 est coiffé de l'étrier inférieur 11 et les vis 41 sont mises en place et serrées. On prévoit aussi entre les deux étriers 11 et 12 la présence d'au moins un pion de cisaillement 47. Ce dernier est visible uniquement sur la figure 4.

Comme cela est visible sur les figures 1 et 3, l'étrier supérieur 12 comprend également des zones d'appui 44, 45 sur le support 40, en forme de flasque fixe, situées au droit des moyens de manoeuvre, ici les pistons hydrauliques 17, 37. Lorsque le support 40 présente une surface plane destinée à recevoir l'étrier 12, les zones d'appui 44, 45 se trouvent dans le même plan que la surface de montage 43 (figure 1).

La mise en oeuvre du frein à disque selon l'invention découle de la description précédente.

Lorsque les chambres hydrauliques, définies par les alésages cylindriques 16, 36 avec les pistons 17 et 37, sont mises en pression, lesdits pistons appliquent les patins 23 et 33 sur le disque 20 en freinant celui-ci, lesquels patins coulissent axialement dans les logements 22 des plaquettes 21, 31. Le couple de freinage est reçu par les plaquettes 21, 31 qui constituent, pour les patins 23 et 33, des butées transversales par lesquelles la réaction de freinage est transmise au support fixe 40 via l'étrier 10.

Il est aisé de comprendre qu'après usure le changement des patins 23 et 33 est très facile : il suffit de dévisser les vis 25 et 35 pour retirer transversalement les plaquettes 21 et 31, et de changer les patins.

Les plaquettes à logement et les patins forment des sous-ensembles du type cartouches, pré-ajustés et prêts à être montés sans aucun réglage.

Dans le cas d'une utilisation du frein comme frein de giration, il est avantageux que chaque patin 23, 33 n'ait que très peu de jeu dans son logement 22. Il est même préférable que le jeu d'un patin 23, 33 dans son logement 22 soit inférieur au jeu du piston 17, 37 correspondant par rapport à son cylindre 16, 36. De cette manière, la fatigue des joints de cylindre est très sensiblement limitée. En effet, le déplacement du piston 17, 37 est limité lors des inversions de sens de marche par le jeu des patins 23, 33 dans leurs logements 22. Cette disposition permet d'éliminer les risques de fuites par destruction prématurée des joints des cylindres 16, 36.

Le montage des patins 23, 33 selon l'invention permet de facilement limiter le jeu entre les patins et les butées correspondantes. Alors que dans les dispositifs de l'art antérieur, lors d'un changement de patins il est nécessaire d'effectuer au moins plusieurs réglages (lorsqu'il n'est pas nécessaire de démonter tout le frein) pour avoir un jeu aussi réduit que possible du patin par rapport à ses butées dans les sens de rotation, aucun réglage n'est plus nécessaire ici. Dans le cas d'une application à une éolienne, lorsque le frein se trouve à quelques dizaines de mètres au dessus du niveau du sol, l'avantage pour le technicien effectuant le changement de pièces est très sensible et apprécié.

Une façon d'avoir peu de jeu entre les patins 23, 33 et leurs logements 22 peut être réalisée très facilement en moulant par exemple directement les patins dans lesdites plaquettes 21, avec bien entendu interposition d'un agent de démoulage. D'autres façons de procéder connues de l'homme du métier permettent également de limiter le jeu entre une pièce (le patin) et son logement et peuvent être mises en oeuvre pour la présente application.

Dans l'exemple décrit et représenté, il y a deux patins 23 et 33, portés par des plaquettes 21 et 31 indépendantes. Grâce à cette disposition, l'effort de retenue est partagé entre les plaquettes, ce qui limite les effets de matage en bout des plaquettes et réduit les efforts appliqués aux vis 25, 35 et aux pions 19.

On appréciera la bonne reprise des efforts par le support 40, grâce notamment aux zones d'appui 44, 45 au droit des pistons 17, 37 qui permet quant à elle de limiter les efforts appliqués au niveau des vis de fixation 41. En effet, sans nécessiter la présence de vis, une bonne partie (la majeure partie) des efforts de retenue de l'étrier 12 sur le support 40 est assurée par les surfaces d'appui 44 et 45. Les vis 41 servent alors essentiellement à transmettre l'effort de retenue de l'étrier inférieur 11. Le pion de cisaillement 47 reprend quant à lui les efforts en cisaillement de l'étrier inférieur 11 par rapport à l'étrier supérieur 12.

Pour agir sur les phénomènes de bruit, les patins, ici au nombre de quatre, peuvent être de natures différentes.

Dans l'exemple décrit et représenté, l'étrier est fixe. En variante, l'étrier est flottant, monté coulissant parallèlement à l'axe du disque, les moyens de manoeuvre n'étant disposés que d'un côté du disque.

Dans la forme représentée, les patins, et donc les logements 22 des plaquettes, sont globalement de forme rectangulaire. Bien entendu, cette forme peut être autre et quelconque.

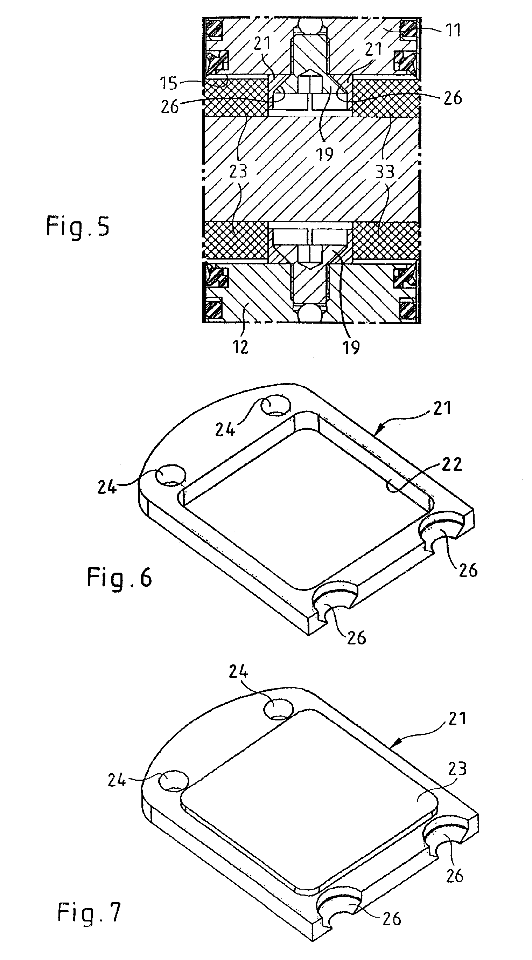

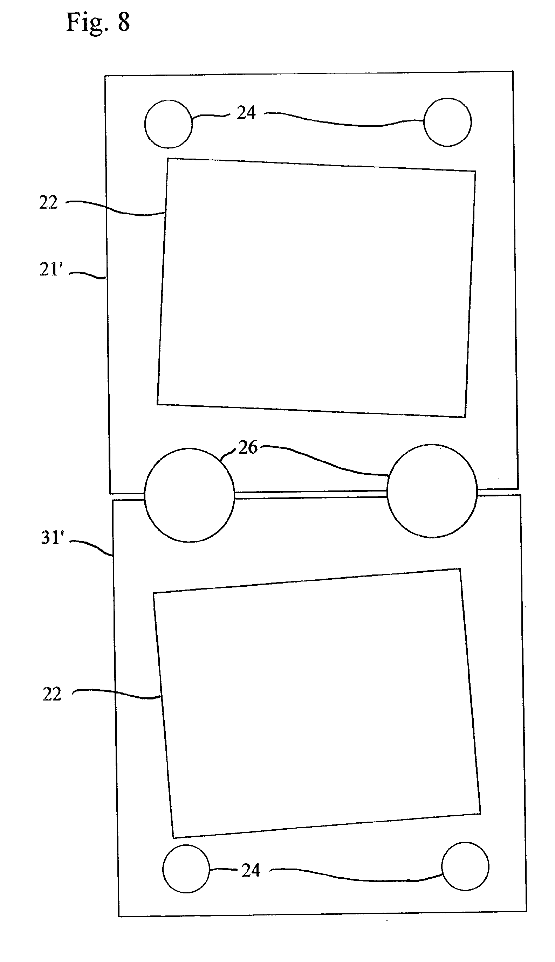

Sur la figure 8, on a représenté un jeu de plaquettes 21', 31' appairées. Alors que dans la forme de réalisation des figures 1 à 7 les plaquettes 21 sont identiques aux plaquettes 31, on a ici une plaquette 31' distincte de la plaquette 21'. Les plaquettes 21' et 31' reprennent la même structure que les plaquettes 21 et 31. Chacune d'elle comporte ainsi un logement 22 pour recevoir un patin 23, 33, deux trous taraudés 24 et deux échancrures 26 destinées à coopérer avec les pions 19.

Comme il ressort de la figure 8, la plaquette 31' est symétrique par rapport à la plaquette 21' dans une symétrie d'axe correspondant à l'axe des deux pions 19. On remarque que les logements 22 dans les plaquettes restent rectangulaires mais que les bords de ces logements 22 ne sont plus parallèles à l'axe reliant les centres des deux pions 19 ou l'axe reliant les centres des trous taraudés 24. Cette nouvelle orientation des logements 22 et donc des patins 23 et 33 permet de s'adapter à la forme du disque et d'optimiser la surface utile des patins 23 et 33.

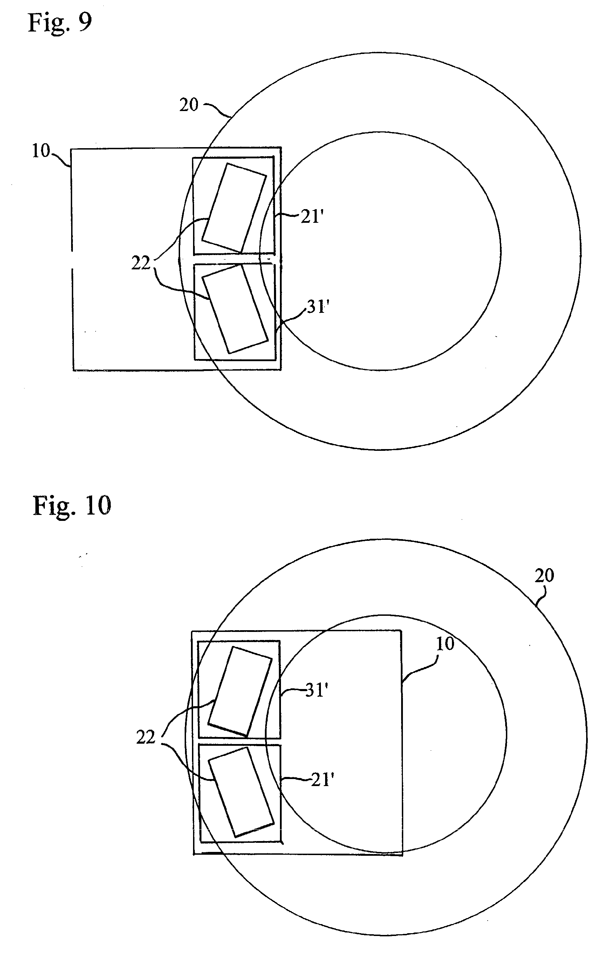

La structure selon l'invention permet ainsi facilement d'adapter un frein à un disque. Il suffit de changer les plaquettes 21, 31 pour s'adapter à un autre disque ou bien encore une autre configuration, comme illustré par les figures 9 et 10. Sur la figure 9, on a représenté très schématiquement un frein selon l'invention pour réaliser un freinage sur le diamètre extérieur d'un disque 20. Seuls le disque 20, l'étrier 10, les plaquettes 21' et 31' et les logements 22 sont représentés. Pour mieux visualiser la position relative de ces éléments, aucune ligne n'a été cachée. En inversant les plaquettes 21' et 31' de la figure 9, le frein à disque représenté est alors adapté à être utilisé sur le diamètre intérieur d'une couronne comme représenté sur la figure 10.

La forme des plaquettes 21, 21', 31, 31', de leurs logements 22 et donc des patins 23, 33 correspondants, peut également être adaptée à la forme de la couronne (ou disque) frottée.

La présente invention ne se limite pas aux formes de réalisation décrites ci-dessus à titre d'exemples non limitatifs. Elle concerne également toute variante de réalisation à la portée de l'homme du métier, dans le cadre des revendications ci-après.

## Revendications

1. Frein à disque pour usage industriel comportant au moins deux patins (22, 23) portés par un étrier (10) adapté à chevaucher le disque (20) et destinés à coopérer chacun avec une face latérale du disque (20) sous l'action de moyens de manoeuvre (16-17, 36-37) et avec une butée transversale lors d'un freinage, **caractérisé par le fait que** la butée transversale est ménagée sur une plaquette (21,31) montée sur ledit étrier (10) de manière amovible transversalement.

2. Frein à disque selon la revendication 1, **caractérisé par le fait que** la plaquette (21,31) présente un logement (22) dans lequel le patin (23,33) est monté coulissant parallèlement à l'axe du disque (20), la plaquette et le patin constituant un sous-ensemble pré-ajusté.

3. Frein à disque selon l'une des revendications 1 ou 2, **caractérisé par le fait que** l'étrier (10) porte des moyens de positionnement (19) de la plaquette (21,31).

4. Frein à disque selon la revendication 3, **caractérisé par le fait que** les moyens de positionnement (19) comprennent au moins un pion s'étendant axialement.

5. Frein à disque selon la revendication 4, **caractérisé par le fait que** la plaquette (21,31) porte latéralement une échancrure (26) destinée à coopérer avec le pion (19), la forme de l'échancrure (26) et celle du pion (19) étant complémentaires.

6. Frein à disque selon la revendication 5, **caractérisé par le fait que** la forme de l'échancrure (26) et celle du pion (19) sont du genre tronconique, la grande base du tronc de cône étant située vers l'extérieur, c'est-à-dire vers le disque (20).

7. Frein à disque selon l'une des revendications 4 à 6, **caractérisé par le fait que** deux patins (23, 33) sont prévus de chaque côté du disque (20) et **par le fait que** ledit au moins un pion (19) est disposé centralement et coopère avec lesdits deux patins (23, 33).

8. Frein à disque selon l'une des revendications 4 à 7, **caractérisé par le fait que** deux pions (19) sont prévus disposés radialement.

9. Frein à disque selon l'une des revendications 1 à 8, **caractérisé par le fait que** la plaquette (21,31) comporte au moins un trou taraudé (24,34) dans lequel est amenée à être vissée une vis (25, 35) s'étendant axialement dans un passage (18) de l'étrier (10), la tête de la vis (25, 35) prenant appui sur l'étrier (10).

10. Frein à disque selon la revendication 9, **caractérisé par le fait que** le passage (18) dans l'étrier (10) est de forme oblongue, sa grande dimension s'étendant transversalement.

11. Frein à disque selon l'une des revendications 1 à 10, **caractérisé par le fait que** l'étrier (10) est fixe en étant assujetti à un support ou flasque fixe (40).

12. Frein à disque selon l'une des revendications 1 à 11, **caractérisé par le fait que** l'étrier (10) est en deux pièces (11,12), solidarisées par des vis (41).

13. Frein à disque selon la revendication 12, **caractérisé par le fait qu'**un pion de cisaillement (47) est prévu entre les deux pièces (11, 12) de l'étrier (10).

14. Frein à disque selon la revendication 11, **caractérisé par le fait que** l'étrier (10) comprend des zones d'appui sur le flasque fixe (40) non seulement au droit de sa zone d'assujettissement (43) mais également au droit des moyens de manoeuvre (17, 37).

15. Frein à disque selon les revendications 11 et 12 prises conjointement, **caractérisé par le fait que** l'une (12) des pièces (11, 12) de l'étrier (10) est munie de moyens permettant son pré-assemblage sur le flasque fixe (40).

16. Frein à disque selon l'une des revendications 1 à 15, **caractérisé par le fait que** les moyens de manoeuvre comprennent des pistons (17, 37) montés coulissant dans des alésages cylindriques (16, 36),

17. Frein à disque selon la revendication 16, **caractérisé par le fait qu'**il y a autant de pistons (17, 37), et donc d'alésages cylindriques (16, 36), que de patins (23, 33),

18. Frein à disque selon l'une des revendications 16 ou 17, **caractérisé par le fait que** deux patins (23, 33) sont prévus de chaque côté du disque (20), et **par le fait que** chaque plaquette munie de son patin est adaptée à ne transmettre que l'effort de retenue dû à l'action du piston qui lui est associé.

19. Frein à disque selon l'une des revendications 16 à 18 prise conjointement avec la revendication 2, **caractérisé par le fait que** le jeu entre un patin (23, 33) et son logement (22) est inférieur au jeu entre le piston (17, 37) et son cylindre (16, 36) correspondant.

20. Frein à disque selon l'une des revendications 1 à 19, **caractérisé par le fait qu'**il est destiné au contrôle de giration d'un dispositif tel une nacelle d'éolienne.
